(19) Europäisches Patentamt
European Patent Office
Office européen des brevets

(11) **EP 2 611 260 B1**

(12) **EUROPÄISCHE PATENTSCHRIFT**

(45) Veröffentlichungstag und Bekanntmachung des Hinweises auf die Patenterteilung:
**18.05.2016  Patentblatt 2016/20**

(51) Int Cl.:
*H05B 3/46* (2006.01)      *F16L 53/00* (2006.01)

(21) Anmeldenummer: **12195576.9**

(22) Anmeldetag: **04.03.2010**

(54) **Elektrisches Heizsystem  für ein Fluid-Leitungssystem**

Electric heating system for a fluid conduit system

Système de chauffage électrique pour un système de conduites de fluide

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.03.2009  DE 202009003807 U**

(43) Veröffentlichungstag der Anmeldung:
**03.07.2013  Patentblatt 2013/27**

(62) Dokumentnummer(n) der früheren Anmeldung(en) nach Art. 76 EPÜ:
**10707516.0 / 2 379 931**

(73) Patentinhaber: **Voss Automotive GmbH**
**51688 Wipperfürth (DE)**

(72) Erfinder:
• **Borgmeier, Olav**
  **42499 Hückeswagen (DE)**
• **Etscheid, Tobias**
  **51789 Lindlar (DE)**
• **Mitterer, Reiner**
  **51688 Wipperfürth (DE)**
• **Schüler, Thomas**
  **51643 Gummersbach (DE)**

(74) Vertreter: **Patent- und Rechtsanwälte**
**Dr. Solf & Zapf**
**Schlossbleiche 20**
**42103 Wuppertal (DE)**

(56) Entgegenhaltungen:
EP-A1- 1 985 908      WO-A1-99/04210
WO-A2-2006/047090      DE-A1-102007 003 454
JP-A- 2002 252 073

**Beschreibung**

Die vorliegende Erfindung betrifft gemäß dem Oberbegriff des Anspruchs 1 ein Heizsystem für ein Fluid-Leitungssystem

Das Dokument WO 2006/047090 A2 offenbart grundsätzlich ein solches elektrisches Heizsystem, allerdings speziell bei einer Heißschmelzkleberpistole, die einen Heizkanal aufweist, in den von einer rückseitigen Öffnung her ein festes, stabförmiges, thermisch schmelzbares Klebermaterial zugeführt werden kann. Der Heizkanal kann hierbei insofern als "Fluidleitung" angesehen werden, als das Heizmaterial in einem Bereich des Heizkanals geschmolzen wird, so dass es dann als "Fluid" aus einer vorderen düsenartigen Öffnung ausströmen kann. Dabei ist dem Heizkanal ein einzelnes elektrisches Heizelement zugeordnet. Dieses Heizelement kann über eine PWM-Schaltung angesteuert werden, wobei ein Controller ein konstantes oder variables Tastverhältnis vorgeben kann.

Das Dokument DE 10 2007 003 454 A1 betrifft eine Heizung für einen Beatmungsschlauch. Dabei sind zwar mehrere einzelne Heizelemente beschrieben, und zwar vier elektrische Heizstrecken (Wicklungen), die durch eine spezielle Verschaltung über zwei Anschlüsse, vier zusätzliche Zwischen-Kontaktierungen sowie über eine als elektrische Verbindung fungierende Diode zum Teil oder alle gemeinsam aktiviert werden.

In der Veröffentlichung WO 99/04210 ist ein Wärmetauscher für einen Kochapparat beschrieben.

Das Dokument JP 2002 252073 A beschreibt Schaltungsmaßnahmen zur Energieeinsparung bei einem einphasigen oder dreiphasigen elektrischen Heizgerät.

Die Veröffentlichung EP 1 985 908 A1 offenbart ein Heizsystem für ein Fluid-Leitungssystem, wobei mehrere elektrische Heizelemente vorgesehen sind, die entweder in einer gemischten Reihen-Parallelschaltung oder gemeinsam in einer Reihenschaltung verschaltet sind. Weitere Einzelheiten über die Art der Ansteuerung der Heizelemente sind in dem Dokument jedoch nicht offenbart.

Zum weiteren Stand der Technik sei beispielhaft auf die Dokumente DE 41 35 082 C1, WO 2007/073286 A1 und EP 1 985 908 A1 verwiesen.

Beheizbare Fluid-Leitungssysteme werden häufig auch in Kraftfahrzeugen eingesetzt, und zwar für solche Medien, die aufgrund ihres Gefrierpunktes bereits bei relativ hohen Umgebungstemperaturen zum Gefrieren neigen. Dadurch können bestimmte Funktionen beeinträchtigt werden. Dies ist beispielsweise bei Wasserleitungen für die Scheibenwaschanlage der Fall, insbesondere aber auch bei Leitungen für eine wässrige Harnstofflösung, die als NOX-Reduktionsadditiv für Dieselmotoren mit so genannten SCR-Katalysatoren eingesetzt wird. Deshalb können bei niedrigen Temperaturen elektrische Heizelemente aktiviert werden, um das Gefrieren zu vermeiden oder um das bereits gefrorene Medium aufzutauen.

Solche Fluid-Leitungssysteme bestehen in der Regel - vgl. insbesondere EP 1 985 908 A1 (Fig. 13, 14) sowie auch WO 2007/073286 A1 - aus mindestens einer Fluidleitung (Rohr- oder Schlauchleitung) mit zwei endseitigen Leitungsverbindern (Steckverbindern). Die Fluidleitung weist ein elektrisches Heizelement in Form einer z. B. schraubenlinienförmig über die Leitungslänge verlaufenden Heizdraht-Bewicklung auf, und zumindest einer der Leitungsverbinder (WO 2007/073286 A1) bzw. jeder der beiden Verbinder (EP 1 985 908 A1) ist ebenfalls mit einem elektrischen Heizelement insbesondere in Form einer Heizdraht-Bewicklung ausgerüstet. Üblicherweise sind alle Heizelemente elektrisch in Reihe geschaltet und mit einer gemeinsamen Strom- bzw. Spannungsversorgung verbindbar (vgl. dazu insbesondere EP 1 985 908 A1, Fig. 14a, 14b).

Ein Problem besteht bei solchen Heizsystemen darin, dass die innerhalb des Leitungssystems vorhandenen Fluidleitungen in aller Regel sehr unterschiedliche Längen aufweisen, so dass auch die effektiven Heizwiderstände der Heizelemente und folglich auch die Heizleistungen entsprechend unterschiedlich sind. Speziell bei sehr kurzen Fluidleitungen (z. B. mit einer Länge von unter 500 mm) kann der beispielsweise wendelförmig über die Leitung verlaufende Heizleiter ebenfalls so kurz sein, dass auch der Heizwiderstand zu gering ist. Ein höherer Widerstand könnte zwar durch Verwendung eines Heizleiters mit reduziertem Querschnitt erreicht werden, was aber mechanische Probleme zur Folge hätte. So könnten Anschlussverbindungen (insbesondere Crimp-Verbindungen) des Heizleiters wegen des geringen Querschnittes und der daraus resultierenden geringen mechanischen Festigkeit nicht mehr prozesssicher hergestellt werden.

Der vorliegenden Erfindung liegt die Aufgabe zu Grunde, bei einem Heizsystem der genannten Art Maßnahmen zu schaffen, um insbesondere zur Anwendung bei zuvor beschriebenen Leitungssystemen in Kraftfahrzeugen auf einfache und wirtschaftliche Weise die elektrische Heizleistung optimieren und an vorgegebene Bedingungen anpassen zu können.

Erfindungsgemäß wird dies durch die Merkmale des unabhängigen Anspruchs 1 erreicht. Vorteilhafte Ausgestaltungsmerkmale sind in den abhängigen Ansprüchen sowie auch in der anschließenden Beschreibung enthalten.

Indem das Heizelement mittels eines elektronischen Steuergliedes zur Einstellung oder Regelung seiner Heizleistung mit einem bestimmten, oder variablen Tastverhältnis pulsweitenmoduliert getaktet angesteuert wird, wird die Betriebsspannung für das Heizelement gegenüber einer Versorgungsspannung, insbesondere gegenüber der Gleichspannung eines Fahrzeug-Bordnetzes (übliche Batterie-Spannung von z. B. 9 bis 16 V oder 20 bis 32 V), reduziert. Somit wird das Heizelement mit einer Betriebsspannung versorgt, die aus der Versorgungsspannung durch eine zur Einstellung oder Regelung der Heizleistung mit einem bestimmten Tastverhältnis getaktete PWM-Steuerung (durch Pulsweitenmodulation) erzeugt wird, sodass der jeweilige Betriebsstrom aus einem Effektivwert der getakteten, gepulsten Betriebsspannung und einem jeweils aktuellen, temperaturabhängigen Widerstand des Heizelementes resultiert. Vorteilhafterweise kann dabei die jeweilige Ist-Heizleistung des Heizelementes über eine Leistungsregelung durch Variation des PWM-Tastverhältnisses auf eine vorgegebene Soll-Heizleistung geregelt werden.

Erfindungsgemäß ist dabei vorgesehen, dass im Falle von mehreren (d. h. mindestens zwei, vorzugsweise drei) elektrisch in Reihe geschalteten Heizelementen, die vorzugsweise der Fluidleitung und deren zwei Leitungsverbindern zugeordnet sind, über die PWM-Steuerung die Heizleistungen der einzelnen Heizelemente separat steuerbar oder regelbar sind. Dazu kann jedem Heizelement oder zumindest einigen aller vorhandenen Heizelemente jeweils ein elektronischer Schalter derart parallel geschaltet sein, dass durch PWM-Ansteuerung des Schalters das jeweilige Heizelement getaktet kurzschließbar ist. Zusätzlich kann die gesamte Heizelement-Reihenschaltung über einen in Reihe geschalteten Schalter ebenfalls PWM-getaktet angesteuert werden.

Diese vorteilhafte Ausgestaltung kann als "intelligente Leitung" bezeichnet werden, weil die innerhalb des Heizsystems vorhandenen Heizelemente weitgehend unabhängig von der Leitungslänge und der Anzahl der elektrischen Heizelemente für eine Optimierung der Heizleistungen angesteuert werden können.

In diesem Zusammenhang sei bemerkt, dass alle beschriebenen Merkmale nicht nur bei "kurzen Leitungen", sondern unabhängig von der jeweiligen Leitungslänge für das/jedes Leitungs-Heizelement sowie auch bei jedem der anderen Heizelemente der Leitungsverbinder anwendbar sind.

Mit Vorteil kann als Heizleiter ein Heizwendelmaterial eingesetzt werden. Dabei handelt es sich um mindestens einen Heizdraht, der wendelförmig um eine dünne Seele verläuft, und diese mit Heizdraht bewickelte Seele verläuft dann als Heizelement wiederum wendelförmig um die Fluidleitung. Auf diese Weise kann die Länge des Heizdrahtes - und damit auch dessen Widerstand - nahezu beliebig vergrößert bzw. auf einen bestimmten Wert vorgegeben werden.

Es ist auch möglich, die Fluidleitung mit mehreren (mindestens zwei) Heizleitern auszustatten und diese dann elektrisch in Reihe zu schalten.

Anhand von einigen in der Zeichnung dargestellten Ausführungsbeispielen soll die Erfindung genauer erläutert werden. Es zeigen:

Fig. 1    eine beispielhafte Ausführungsform eines elektrisch beheizbaren Fluid-Leitungssystems in einer Perspektivdarstellung mit einem Heizsystem mit drei zusätzlich schematisch als Schaltungssymbole eingezeichneten Heizelementen,

Fig. 2    ein schematisches Ersatzschaltbild des Heizsystems nach Fig. 1,

Fig. 3    eine vereinfachte Prinzipansicht eines Abschnittes einer Fluidleitung mit einem Heizelement in Form eines wendelförmigen Heizdrahtes,

Fig. 4    ein Ersatzschaltbild zu Fig. 3,

Fig. 5    ein weiteres Ersatzschaltbild zu Fig. 3 mit einem zusätzlichen Vorwiderstand,

Fig. 6    einen gegenüber Fig. 3 vergrößerten Abschnitt einer Fluidleitung mit einem besonderen Heizelement,

Fig. 7a-c   verschiedene Ausführungsbeispiele des besonderen Heizelementes gemäß Fig. 6,

Fig. 8    ein weiteres Ersatzschaltbild des Heizsystems in einer besonderen Ausgestaltung,

Fig. 9    ein Schaltbild einer elektronischen Kippstufe zur Stromregelung des Heizelementes,

Fig. 10    ein weiteres Schaltbild einer Kippstufe in einer Alternative zu Fig. 9,

Fig. 11    eine Ausführungsvariante zu Fig. 10,

Fig. 12    ein Ersatzschaltbild in einer erfindungsgemäßen Ausführung des Heizsystems,

Fig. 13    ein Blockschaltbild einer bevorzugten Reglereinheit,

Fig. 14    ein vereinfachtes Blockschaltbild zum Grundprinzip der Reglereinheit,

Fig. 15    eine schematische Blockdarstellung einer Treiberstufe,

Fig. 16    Diagramme zur Erläuterung einer PWM-Modulation der Versorgungsspannung zur Erzeugung von modulierten Betriebsspannungen für die Heizelemente,

Fig. 17    einen Abschnitt einer Fluidleitung mit Heizdraht in einer besonderen Ausführungsform, wobei die Teilfiguren a) und b) verschiedene Zustände während eines Fertigungsprozesses zeigen, und

Fig. 18    eine vergrößerte und teilweise geschnittene Darstellung eines Endabschnittes einer Fluidleitung in einer alternativen Ausgestaltung des Heizelementes.

In den verschiedenen Zeichnungsfiguren sind gleiche Teile stets mit den gleichen Bezugszeichen versehen.

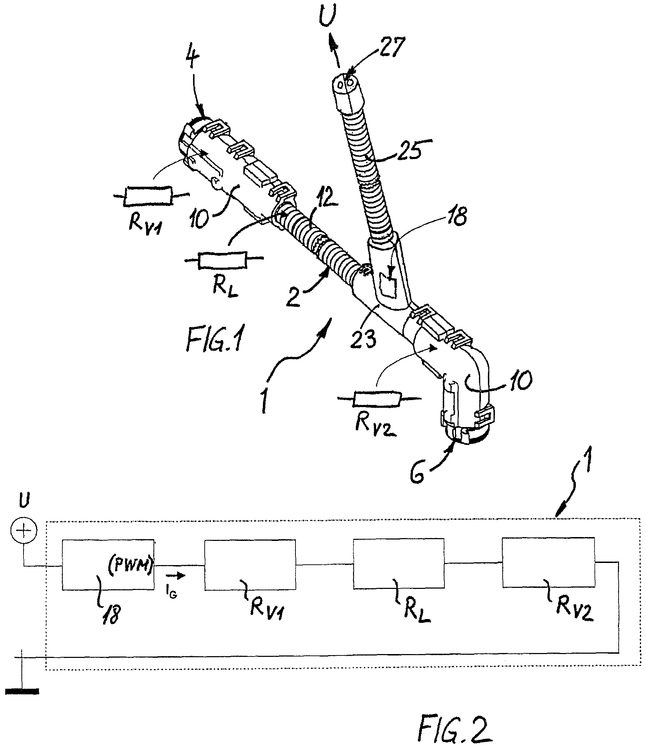

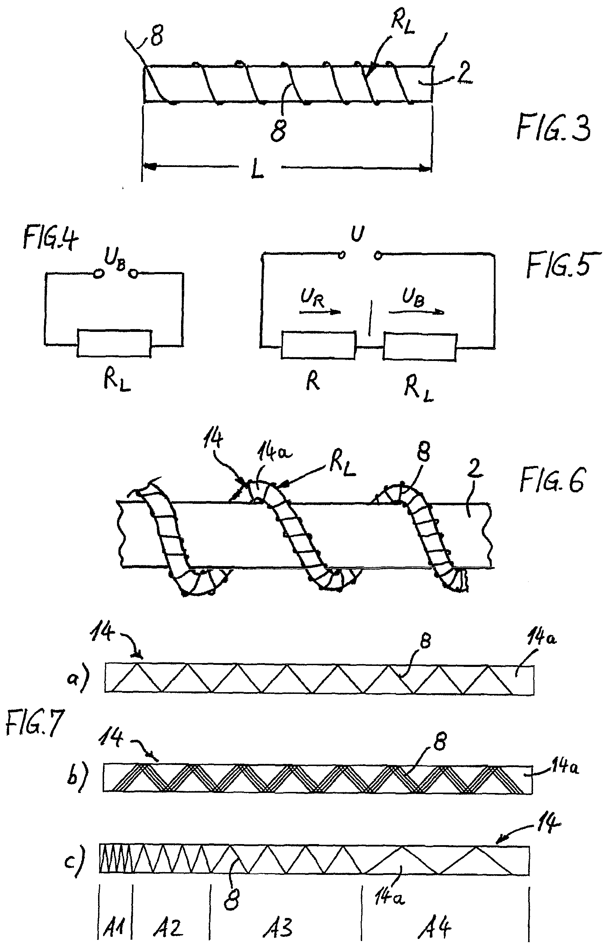

In Fig. 1 ist beispielhaft ein Fluid-Leitungssystem 1 dargestellt, welches aus einem Leitungssatz mit einer Fluidleitung 2 und zwei endseitig mit der Leitung 2 verbundenen Leitungsverbindern 4, 6 sowie aus elektrischen Heizmitteln besteht. Als Heizmittel sind elektrische Widerstands-Heizelemente R vorgesehen, und zwar weisen die Fluidleitung 2 ein elektrisches Heizelement $R_L$ und bevorzugt jeder Fluidverbinder 4, 6 als Heizmittel ein elektrisches Heizelement $R_{V1}$ bzw. $R_{V2}$ auf. Alle Heizelemente (elektrische Heizwiderstände R) können bevorzugt aus jeweils mindestens einer Bewicklung mit mindestens einem Heizdraht 8 bestehen (siehe hierzu Fig. 3 sowie Fig. 13 und 14). Es ist vorteilhaft, wenn die Heizelemente $R_{V1}$ und $R_{V2}$ der Leitungsverbinder 4, 6 jeweils mit einem äußeren Gehäuse 10 umkapselt sind, und die Fluidleitung 2 weist zweckmäßig einen äußeren, das Heizelement $R_L$ umgebenden Mantel 12, beispielweise in Form eines Wellrohres auf.

Innerhalb eines Fahrzeuges und bei der bevorzugten Anwendung für ein SCR-Katalysatorsystem bilden in der Regel mehrere einzelne Leitungssysteme 1 ein Gesamt-Leitungssystem, und zwar für die erforderlichen Fluid-Verbindungen zwischen einem Tank und einem Fördermodul (mit Vor- und Rücklauf) und zwischen dem Fördermodul und einer Dosiereinheit (als Einzelleitung oder auch mit Vor- und Rücklauf), wobei die Dosiereinheit das SCR-Reduktionsadditiv dosiert in einen Abgasstrang einbringt. Je nach Anordnung der zu verbindenden Aggregate innerhalb des jeweiligen Fahrzeuges können sehr unterschiedliche Längen der einzelnen Leitungen erforderlich sein, was auch einen Einfluss auf die Widerstände der jeweiligen Heizelemente und damit auch - bei vorgegebener Versorgungsspannung U - auf deren Heizleistungen hat.

Wie beispielhaft in Fig. 3 dargestellt ist, kann bei bestimmten Aggregat-Verbindungen die Länge L der jeweiligen Fluidleitung 2 derart klein sein, dass auf diesem Teilstück der Leitung 2 mit der Länge L nur derart wenig Heizdraht 8 angeordnet ist bzw. angeordnet sein kann, dass der elektrische Widerstand des Heizelementes $R_L$ zu gering ist. Deshalb wird gemäß Fig. 4 das Heizelement $R_L$ der Fluidleitung 2 mit einer elektrischen Betriebsspannung $U_B$ betrieben, die gegenüber einer Versorgungsspannung U (in einem Fahrzeug die dort vorhandene Gleichspannung des jeweiligen Bordnetzes in aller Regel die Batteriespannung von z. B. 9 bis 16 V oder 20 bis 32 V) auf beispielsweise etwa 50 % reduziert ist. Beispielsweise kann die Versorgungsspannung von 14 V auf 5 bis 8 V reduziert werden.

Gemäß Fig. 5 könnte dies in einfachster Weise durch einen Vorwiderstand R erreicht werden, der in elektrischer Reihenschaltung mit dem Heizelement $R_L$ angeordnet ist, wobei der Vorwiderstand R so ausgelegt ist, dass an dem Heizelement $R_L$ die gewünschte Betriebsspannung $U_B$ anliegt. Somit fällt an dem Vorwiderstand R die Spannungsdifferenz $U_R = U - U_B$ ab.

In der Ausführung gemäß Fig. 6 wird als Heizelement $R_L$ ein Heizwendelmaterial 14 eingesetzt. Dabei handelt es sich um einen Heizdraht 8, der wendelförmig um eine dünne Seele 14a verläuft, und diese mit dem Heizdraht 8 bewickelte Seele 14a verläuft dann als Heizelement $R_L$ wiederum wendelförmig bzw. schraubenlinienförmig um die Fluidleitung 2. In Fig. 7 sind verschiedene Ausführungen des Heizwendelmaterials 14 veranschaulicht. Gemäß Fig. 7a kann es sich um eine Einfachwendel oder gemäß Fig. 7b um eine Mehrfachwendel mit zwei bis zehn (wie dargestellt z. B. drei) parallel verlaufenden Heizdrähten handeln. Bei der Ausführung gemäß Fig. 7c sind unterschiedliche Abschnitte A1 bis A4 mit verschiedenen Windungsabständen vorgesehen.

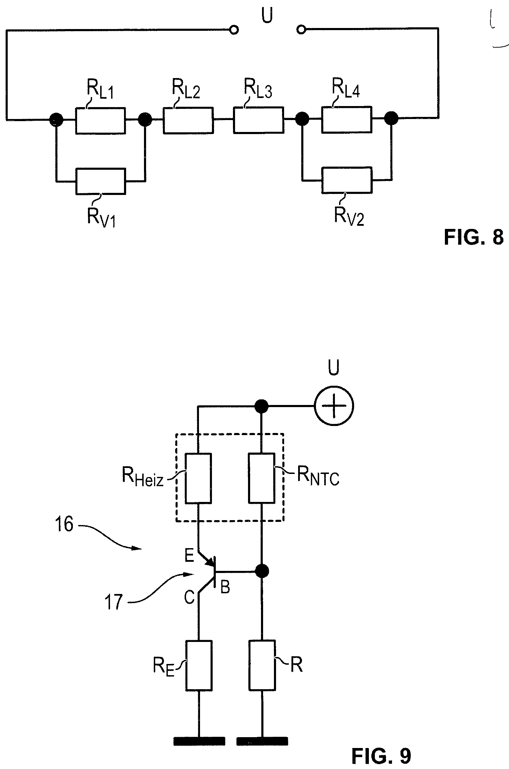

In Fig. 8 ist eine weitere Alternative veranschaulicht, wobei das Heizelement $R_L$ der Fluidleitung 2 aus mehreren (mindestens zwei, wie dargestellt aber vier) Heizleitern $R_{L1}$ bis $R_{L4}$ besteht, die allesamt elektrisch in Reihe geschaltet sind. Auf diese Weise kann ebenfalls ein erhöhter Gesamtwiderstand erreicht werden. Wie in Fig. 8 zusätzlich dargestellt ist, können die Heizelemente $R_{V1}$ und $R_{V2}$ der Leitungsverbinder 4, 6 jeweils parallel zu einem der mehreren Heizleiter der Fluidleitung 2 geschaltet sein; wie dargestellt ist beispielsweise $R_{V1}$ parallel zu $R_{L1}$ und $R_{V2}$ parallel zu $R_{L4}$ angeordnet. Hierbei werden die Widerstände $R_{V1}$ und $R_{V2}$ in Abhängigkeit von der gewünschten Gesamtleistung an die Widerstände $R_{L1}$, $R_{L4}$ angepasst.

In Fig. 9, 10 und 11 ist beispielhaft jeweils ein Schaltbild einer elektronischen Kippstufe 16 dargestellt. Diese Kippstufe 16 dient zur elektronischen Stromregelung (Zweipunktregelung) des Heizelementes $R_{Heiz}$. Vorteilhafterweise arbeitet die Kippstufe 16 autark ohne gesonderte Steuerung oder Regelung mit konstanter Taktfrequenz. Bei den Ausführungsbeispielen gemäß Fig. 9 bis 11 wird das jeweilige Heizelement $R_{Heiz}$ über einen elektronischen Schalter 17 geschaltet. Der Schalter 17 wird über einen Spannungsteiler aus einem temperaturabhängigen Widerstand $R_{NTC}$ oder $R_{PTC}$ und einem Vorwiderstand R angesteuert, wobei der temperaturabhängige Widerstand räumlich in der Nähe des Heizelementes $R_{Heiz}$ angeordnet ist, um dessen Wärme zu erfassen. Dadurch ändert sich im Betrieb das Spannungsteiler-Verhältnis derart, dass über den Schalter 17 das Heizelement $R_{Heiz}$ periodisch oder zyklisch ein- und ausgeschaltet wird.

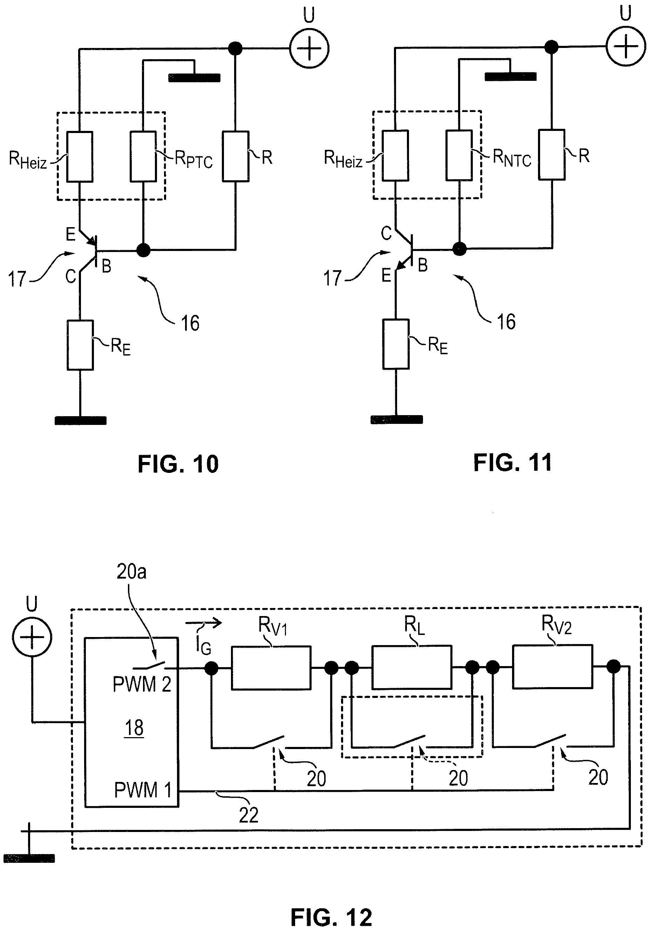

Bei der Ausführung gemäß Fig. 9 ist der Schalter 17 als pnp-Transistor ausgebildet, und der temperaturabhängige Widerstand $R_{NTC}$ weist einen negativen Temperaturkoeffizient (NTC) auf. Dabei kann durch Austausch des pnp-Transistors in einen npn-Transistor und Tausch des $R_{NTC}$ in einen Widerstand $R_{PTC}$ mit positivem Temperaturkoeffizient ein gleichwirkender Schaltungsaufbau erreicht werden. Gemäß Fig. 10 handelt es sich ebenfalls um einen pnp-Transistor, aber um einen Widerstand $R_{PTC}$ mit positivem Temperaturkoeffizient. Gemäß Fig. 11 kann die Kippstufe 16 als Schalter 17 auch einen npn-Transistor in Verbindung mit einem Widerstand $R_{NTC}$ mit negativem Temperaturkoeffizient aufweisen.

Alternativ zu Fig. 9 bis 11 kann auch eine entsprechende Schaltung mit ZweipunktRegelung durch eine Kippstufe in Form einer nicht dargestellten Relais-Schaltung beispielsweise in Kombination mit einem Bimetall-Element vorgesehen sein.

Wie sich nun aus Fig. 12 ergibt, wird erfindungsgemäß zumindest das Leitungs-Heizelement $R_L$ von einem elektronischen Steuerglied 18 angesteuert, indem das Heizelement zur Einstellung oder Regelung seiner Heizleistung mit einem bestimmten Tastverhältnis PWM-getaktet wird. Dazu kann gemäß Fig. 12 ein elektronischer Schalter 20 derart parallel zu dem Heizelement geschaltet sein, dass durch PWM-Ansteuerung (PWM 1) des Schalters 20 das jeweilige Heizelement getaktet kurzschließbar ist. Zusätzlich kann innerhalb des Steuergliedes 18 ein entsprechender elektronischer Schalter 20a in Reihe mit dem Heizelement so vorgesehen sein, dass über eine PWM-Taktung (PWM 2) das Heizelement getaktet ein- und ausgeschaltet werden kann. Dabei ist das jeweilige Tastverhältnis der PWM-Ansteuerung zur Einstellung und/oder Regelung der Heizleistung variabel.

Wie sich aus Fig. 2 und 12 ergibt, können auch alle in Reihe geschalteten Heizelemente $R_{V1}$, $R_L$ und $R_{V2}$ eines Leitungssystems 1 gemeinsam über das Steuerglied 18 pulsweitenmoduliert angesteuert werden. Diese Option ist in Fig. 2 mit der Klammerangabe "(PWM)" angedeutet.

Wie sich nun weiterhin aus Fig. 12 ergibt, ist erfindungsgemäß auch bei der Reihenschaltung aller Heizelemente vorteilhafterweise eine individuelle Ansteuerung jedes einzelnen Heizelementes vorgesehen. Dazu kann jedem Heizelement ein elektronischer Schalter 20 parallel geschaltet sein, wobei das Steuerglied 18 die einzelnen Schalter 20 individuell PWM-moduliert ansteuern kann. Dazu können die Schalter 20 über einen gemeinsamen Steuerbus 22 individuell angesteuert werden, indem die Schalter 20 über eine integrierte Intelligenz anhand einer Adressierung aktiviert werden können. Dieses System kann als "intelligenter Leitungssatz" bezeichnet werden.

Gemäß Fig. 12 kann auch einer der Schalter 20, insbesondere der zu dem Leitungs-Heizelement $R_L$ parallele Schalter 20 (deshalb durch gestrichelte Umrahmung als Option gekennzeichnet) entfallen, so dass nur die Heizelemente $R_{V1}$ und $R_{V2}$ der Leitungsverbinder 4, 6 jeweils einen parallelen intelligenten Schalter 20 aufweisen, wobei diese Schalter 20 individuell über den Steuerbus 22 von der PWM-Steuerung PWM 1 ansteuerbar sind. Die Gesamtleistung der Reihenschaltung der Heizelemente kann dann über einen zusätzlich in Reihe liegenden Schalter 20a über die Steuerung PWM 2 gesteuert werden.

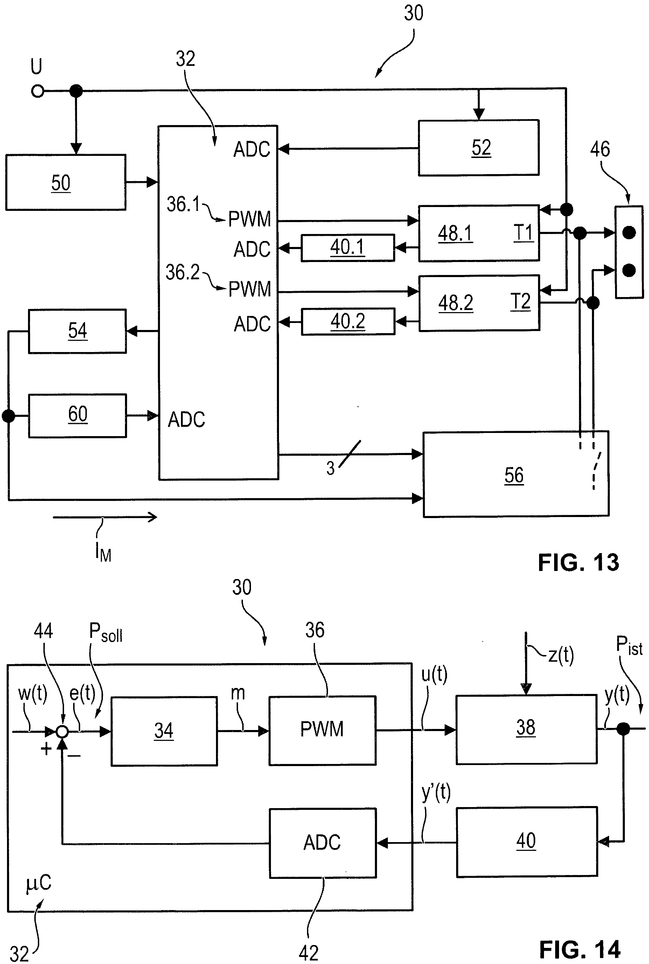

Anhand der Fig. 13 bis 16 sollen bevorzugte Maßnahmen zur Regelung der Heizleistung der Heizelemente R erläutert werden, wobei die Schalter 20, 20a gemäß Fig. 12 als Transistoren T ($T_1$, $T_2$) bezeichnet sind. Die Heizelemente R sind über die zugehörigen Transistoren $T_1$, $T_2$, zur Einstellung der Heizleistung steuerbar. Dadurch kann die Heizleistung konstant gehalten oder an bestimmte Bedingungen, wie insbesondere die jeweilige Außen- bzw. Umgebungstemperatur, angepasst werden. Zudem ist dadurch die Heizleistung unabhängig von der jeweiligen Betriebsspannung einstellbar. Bevorzugt sind die Schalter bzw. Transistoren T zur Regelung der Heizleistungen der Heizelemente R von einer Reglereinheit 30 ansteuerbar, deren Regelgröße somit die jeweilige Heizleistung ist, indem die jeweilige tatsächliche Heizleistung als Istwert ermittelt und auf eine vorgegebene Soll-Heizleistung (Sollwert) geregelt wird. Als Sollwert kann somit jeweils eine bestimmte, zuvor unter Berücksichtigung bestimmter Parameter (wie z. B. Leitungslänge, Umgebungstemperatur und/oder dergleichen) ermittelte Heizleistung (P = U · I) konkret vorgegeben werden. Es ist aber auch möglich, als Sollwert eine andere physikalische Größe (z. B. geometrische Parameter, wie Material, Anzahl, Durchmesser und Länge der Heizleiter, die Außen- bzw. Umgebungstemperatur, Betriebstemperatur des SCR-Systems und/oder eine vorgegebene Auftauzeit) vorzugeben, wobei dieser Sollwert dann vom System selbsttätig zu einer Soll-Heizleistung bzw. zu einer effektiven Spannung transformiert wird.

Die erfindungsgemäße Regelung basiert in der Hauptsache auf einer PWM-Ansteuerung des jeweiligen Schalters bzw. Transistors T, d. h. auf einer pulsweitenmodulierten Ansteuerung mit hinsichtlich ihrer zeitlichen Breite variablen Schaltimpulsen. Dazu wird eine Versorgungsspannung U, in einem Fahrzeug die Batteriespannung von z. B. 9 bis 16 V oder 20 bis 32 V, über den jeweiligen Schalter T getaktet auf die Heizelemente R geschaltet. Die Regelung erfolgt dabei durch Variation des so genannten Tastverhältnisses bzw. des Modulationsgrades m.

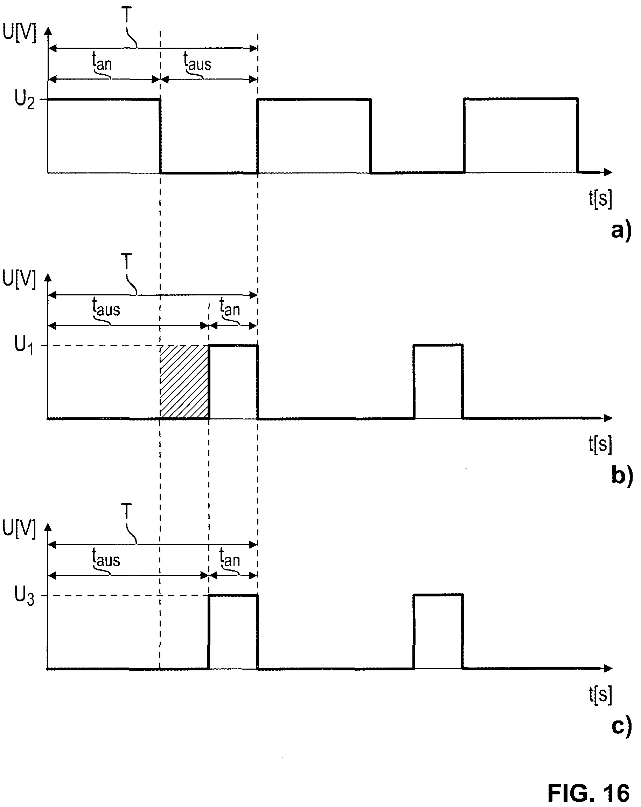

Dazu wird auf Fig. 16 verwiesen, wonach innerhalb einer Gesamt-Schaltperiode T ein Impuls mit einer variablen Einschaltzeit $t_{an}$ erzeugt wird. Die verbleibende Zeit ist als Ausschaltzeit mit $t_{aus}$ bezeichnet. Dabei ist das Tastverhältnis definiert durch:

$$m = \frac{t_{an}}{T}$$

Somit kann m einen Wert im Bereich von 0 bis 1 annehmen. Die so gebildeten Spannungsimpulse führen zu einem Effektivwert $U_{eff} = m \cdot U$, der somit in einem Bereich von 0 % bis 100 % der Versorgungsspannung U liegen kann.

Werden die Heizelemente R nun mit der jeweiligen getakteten Betriebsspannung $U_1$, $U_2$, ggf. $U_3$ versorgt, so resultiert daraus - nach dem Ohm'schen Gesetz

$$I_{eff} = \frac{U_{eff}}{R}$$

- ein effektiver Strom, der sich aus dem jeweiligen Effektivwert der Betriebsspannung dividiert durch den jeweils aktuellen, temperaturabhängigen Widerstand R(T) des jeweiligen Heizelementes R ergibt. Für die Heizleistung des jeweiligen Heizelementes R bedeutet dies:

$$P = m \cdot U \cdot I = m \cdot \frac{U^2}{R(T)} = m \cdot I^2 \cdot R(T)$$

Daraus ergeben sich für Spannung und Strom annähernd Rechteckimpulse mit jeweils nur zwei Zuständen, zeitweise volle Versorgungsspannung / voller Strom und zeitweise spannungs- /stromlos (Pausen).

Das erfindungsgemäße Prinzip der Regelung ist in Fig. 14 vereinfacht dargestellt. Ein Mikrocontroller 32 ist in den Regelkreis integriert und enthält einen Regler 34 für das Tastverhältnis m eines PWM-Modulators 36, der eine Stellgröße u(t) für eine nachgeschaltete Regelstrecke 38 abgibt. Der Istwert am Ende der Regelstrecke 38 wird als Regelgröße y(t) über einen Sensor 40 abgegriffen und vorzugsweise über einen A/D-Wandler 42 als angepasste Rückführungsgröße y'(t) dem Regler 34 bzw. einem Addierer 44 zugeführt, der daraus und aus einem Sollwert (Führungsgröße) w(t) eine Regeldifferenz e(t) = w(t) - y(t) für den Regler 34 erzeugt. Mit z(t) ist noch eine Störgröße eingezeichnet, bei der es sich um (mindestens) eine von außen auf das System einwirkende Größe, wie z. B. die Außentemperatur (äußere Umgebungstemperatur) handelt. So erzeugt der Fahrtwind höhere Wärmeverluste. Es kann auch bereichsweise ein Wärmestau auftreten. Zudem kann es zu temperaturabhängigen Schwankungen des Widerstandes der Heizelemente kommen ($R_{min}/R_{max}$).

Die Regelgröße des Leistungsreglers (Reglereinheit 30) ist die Heizleistung. Als Führungsgröße/Sollwert (Kennfeld) w(t) bzw. zu deren Festlegung können wahlweise folgende Größen verwendet werden (ggf. in teilweiser Kombination):

- effektive Spannung

- Temperatur des Heizelementes, des Fluids, der Fluidleitung und/oder des Leitungsverbinders

- eine vorgegebene Auftauzeit (insbesondere im Kombination mit der effektiven Spannung

- Heizleistung

- Widerstand des Heizelementes ($R_{min}/R_{max}$)

- geometrische Parameter (Heizelement: Art, Material, Anzahl, Durchmesser und Länge von Heizleitern)

- Umgebungstemperatur

- Betriebstemperatur des Fluidsystems.

Der Ausgang der Regelstrecke 38 wird konstant gehalten. Es handelt sich somit um das Prinzip einer Festwertregelung, wobei die Führungsgröße w(t) fest vorgegeben wird. Durch die Verwendung eines Festwertreglers ist es vorteilhafterweise möglich, bei Änderungen im Bereich des Fluid-Leitungssystems 1 bzw. bei Änderungen im Bereich der Wärmeübertragung zwischen Heizelement und Leitungssystem durch Ändern von nur einem Parameter, und zwar der Führungsgröße w(t), den Regler anzupassen.

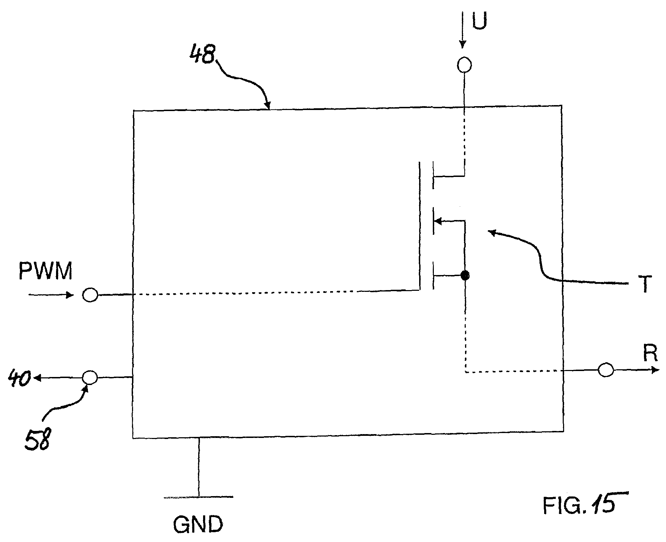

In Fig. 13 ist beispielhaft ein Blockschaltbild einer Regelung für zwei separat steuerbare Heizelemente bzw. Heizelement-Gruppen über zugehörige Schalter $T_1$, $T_2$ veranschaulicht, wobei die Heizelemente selbst in Fig. 13 nicht dargestellt, sondern über ein Steckverbindungsteil 46 anschließbar sind. Für jedes Heizelement ist eine Treiberschaltung 48 (48.1, 48.2) mit dem jeweiligen Schalter T1, T2 vorgesehen. Jede Treiberschaltung 48 kann mit dem jeweiligen Schalter $T_1$ bzw. $T_2$ als so genannter "High-Side-Driver" ausgeführt sein (vgl. Fig. 15). Der Mikrocontroller 32 enthält für jede Treiberschaltung 48 einen eigenen PWM-Modulator 36.1, 36.2. Jede Treiberschaltung 48 ist bei dem dargestellten Beispiel über einen Sensor 40.1, 40.2 mit einem eigenen Eingang ADC des Mikrocontrollers 32 verbunden. Alternativ ist aber auch ein Multiplexer-Betrieb über einen gemeinsamen Eingang ADC möglich. Die Versorgungsspannung U wird über einen Spannungsregler 50 in eine Speisespannung von insbesondere 5V umgeformt und dem Mikrocontroller 32 zugeführt. Weiterhin wird die Versorgungsspannung U auch allen Treiberschaltungen 48 zugeführt. Zusätzlich ist ein Spannungsteiler 52 zur Überwachung der Versorgungsspannung U und zum Detektieren der Eingangsspannungshöhe vorgesehen, da diese ja in verschiedenen Fahrzeugen unterschiedlich hoch sein kann. Mit den Treiberschaltungen 48 wird die Heizleistung der Heizelemente gesteuert.

Wie sich weiterhin aus Fig. 13 ergibt, ist der Mikrocontroller 32 zusätzlich mit einer Konstantstromquelle 54 verbunden, deren Ausgang über eine Schalteinrichtung 56 wahlweise einzeln auf jedes Heizelement bzw. jede Gruppe geschaltet werden kann.

In Fig. 15 ist eine der Treiberschaltungen 48 stark vereinfacht dargestellt. Dazu sei bemerkt, dass die Treiberschaltung einen speziellen Ausgang 58 für ein dem jeweiligen Betriebsstrom des Heizelementes proportionales Sensorsignal aufweist, welches dem Sensor 40 zugeführt wird.

Im Folgenden soll die Funktion der Regelung genauer erläutert werden.

Zur Ermittlung des jeweils erforderlichen Tastverhältnisses m wird einerseits einmalig zur Initialisierung bei Betriebsbeginn sowie andererseits zyklisch während des Betriebs in jeweils einem Messzyklus für das Heizelement R dessen aktueller Widerstand R(T) ermittelt und daraus mit der jeweils anliegenden Versorgungsspannung U das für die jeweils vorgegebene Soll-Heizleistung $P_{Soll}$ erforderliche PWM-Tastverhältnis m ermittelt. Dazu wird in jedem Messzyklus bei vorübergehend ausgeschaltetem Betriebsstrom I ein bestimmter Konstantmessstrom $I_M$ aus der Konstantstromquelle 54 über die Schalteinrichtung 56 durch das jeweilige Heizelement geführt. Die daraus resultierende Spannung UM wird über einen Operationsverstärker 60 auf einen ADC-Eingang des Mikrocontrollers 32 geführt und dient der Auswertung der aktuellen Leistungsdaten. Aus dem Konstantmessstrom und dem zugehörigen Spannungsabfall kann der aktuelle Widerstand nach dem Ohm'schen Gesetz

$$R(T) = \frac{U_M}{I_M}$$

bestimmt werden. Es kann dann das für die jeweils gewünschte Soll-Heizleistung $P_{Soll}$ erforderliche PWM-Tastverhältnis m aus dem Produkt Soll-Heizleistung mal aktueller Widerstand dividiert durch das Quadrat der Versorgungsspannung bestimmt werden; es gilt

$$m = P_{Soll} \cdot \frac{R(T)}{U^2}$$

Im Anschluss an jeden Messzyklus wird für das/jedes zu steuernde Heizelement R die Betriebsspannung mit dem so ermittelten Tastverhältnis $m_n$ erzeugt: $U_n = m_n \cdot U$.

Der oben erwähnte Ausgang 58 jeder Treiberschaltung 48 liefert dann im Betrieb ein Stromsignal, welches einen zum jeweiligen Betriebsstrom (Istwert) proportionalen Referenzstrom darstellt. Der nachgeschaltete Sensor 40 integriert diesen Referenzstrom zur Erzeugung eines Spannungsmittelwertes. Allerdings kann alternativ der Spannungsmittelwert auch berechnet werden. Aus diesen Werten kann dann der Istwert der jeweiligen Heizleistung mit $P_{Ist} = m_n \cdot I^2_n \cdot R(T)$ bestimmt werden. Die Regelung regelt dann durch Variation des Tastverhältnisses m den Istwert auf die vorgegebene Soll-Heizleistung.

Wie sich noch aus den Diagrammen in Fig. 16 ergibt, wo rein beispielhaft eine Ausführung zur Bereitstellung von drei Spannungen für drei Heizelement-Kreise veranschaulicht ist, können vorzugsweise die Schalter bezüglich der PWM-Steuerung derart zeitversetzt angesteuert werden, dass sich ihre PWM-Signale (vgl. in Fig. 16 die Spannungsimpulse $U_1$, $U_2$ und $U_3$) nicht oder nur teilweise zeitlich überlappen. So kann beispielsweise vorgesehen sein, die Heizelemente $R_1$ und $R_3$ mit den Betriebsspannungen $U_1$ und $U_3$ in den Pausenzeiten der Ansteuerung des Heizelementes $R_2$ bzw. dessen Betriebsspannung $U_2$ anzusteuern, wobei abweichend von der Darstellung in Fig. 16 auch die Spannungsimpulse $U_1$ und $U_3$ der Teil-Diagramme b) und c) relativ zueinander zeitlich versetzt innerhalb der Pause von $U_2$ gemäß Diagramm a) liegen können (s. den beispielhaft in Diagramm b) schraffiert und gestrichelt angedeuteten Spannungsimpuls für $U_1$). Durch diese Maßnahme wird der maximale Gesamtstrom des Heizsystems vorteilhaft gering gehalten.

Weiterhin sind bevorzugt Mittel zur Überwachung der Höhe der Versorgungsspannung U und zur automatischen Anpassung der Regelung an die jeweilige Versorgungsspannung U vorgesehen.

Im Folgenden sollen hinsichtlich der bevorzugten Regelung noch weitere vorteilhafte Möglichkeiten erläutert werden.

In der Reglereinheit 30 kann - insbesondere in Form einer gespeicherten Tabelle - ein Kennfeld zur Bestimmung des Sollwertes hinterlegt sein. Dieses Kennfeld kann aus den Parametern Heizleistung, Umgebungstemperatur, Betriebstemperatur des FluidSystems, bestimmten geometrischen Parametern, der vorgegebenen Auftauzeit und/oder dergleichen bestehen. Zudem kann in dem Kennfeld auch eine Temperaturänderungsgeschwindigkeit (dT/dt), eine Widerstandänderungsgeschwindigkeit (dR/dt) und/oder eine Geometrieänderungsgeschwindigkeit (beispielsweise ds/dt) hinterlegt sein. Letzteres berücksichtigt insbesondere Volumenänderungen des Fluids beim Gefrieren oder Auftauen, indem durch geeignete Sensoren eine axiale und/oder radiale Wegänderung erfasst wird.

Vorteilhafte Möglichkeiten für eine solche Sensorik zur Bestimmung des Aggregatzustandes eines Mediums in einer Fluid-Leitung sollen wie folgt beispielhaft beschrieben werden.

Die Veröffentlichung WO 2009/040223 A2 beschreibt eine Anschlussvorrichtung in Form einer Leitungs-Steckverbindung mit derart ausgebildeten Haltemitteln, dass ein eingesteckter und arretierter Steckabschnitt ausgehend von einer Normalbetriebsposition zur Vergrößerung eines innerhalb eines Anschlussteils mit dem Medium beaufschlagten Innenvolumens über einen bestimmten Weg hinweg gegen eine Rückstellkraft relativ zu dem Anschlussteil bewegbar ist. So kann also das gefrierende Medium (z. B. Harnstofflösung) sich ausdehnen. Um hierbei erkennen zu können, ob das Medium gefroren ist oder nicht bzw. ob die Medienleitung einsatzbereit ist oder nicht, können elektrische Messmittel integriert werden, um eine Auswertung des Aggregatzustandes des durchströmenden Mediums vornehmen zu können.

Da sich das gefrierende Medium ausdehnt, kann eine Wegmessung integriert werden. Dies kann beispielsweise über den so genannten Wiegand-Effekt, über Piezoelemente (kapazitive Sensoren), mit Hallgebern (induktive Sensoren) oder aber auch über einen aktiven Schwingkreis (aktive Sensoren) erfolgen. Ferner kann auch ein Lichtsignal (Lasersignal) mittels eines Glasfaserkabels in die Anschlussvorrichtung eingespeist werden, um damit eine Reflexionsänderung zu messen. Auch ist es denkbar, mit Dehnungsmessstreifen die Wegänderung zu messen.

1. Piezoelement

Es werden Piezoelemente angebracht, die so angeordnet sind, dass diese bei einer axialen Wegänderung durch die Volumenausdehnung des gefrorenen Mediums elastisch verformt werden.

2. Hallsensor

Die Wegmessung erfolgt über mindestens einen Hallsensor. Durch die Volumenänderung des Mediums wird die axiale Wegänderung gemessen.

3. Dehnungsmessstreifen (DMS)

Diese Dehnungsmessstreifen werden so angebracht, dass eine axiale/radiale Volumenausdehnung (Wegänderung) messbar ist.

4. Wiegand-Sensor

Ein Wiegand-Draht ist als Federelement ausgeführt, wodurch der Wiegand-Effekt erzeugt wird. Das Federelement hält einen Kolben gegen den Betriebsdruck des fluiden Mediums in einer stabilen Lage, kann alternativ auch als Zusatzfeder angebracht sein.

Der Wiegand-Draht besteht aus einer speziellen Legierung:

- Mantel: hartmagnetisches Metall
- Kern: weichmagnetisches Metall

Es kommt zu einer sprunghaften Ummagnetisierung des Kerns. Dieser Ummagnetisierungsspannungspuls kann mit Hilfe einer Spule, die den Wiegand-Draht umgibt, gemessen und damit der Aggregatzustand des Fluid ausgewertet werden.

5. Einleitung von Lichtsignalen/Laserimpuls; Sensorik mittels Licht-Dispersion

Der Verbinder ist im Schaftbereich zur Fluidleitung lasertransparent, so dass mit einem Laser direkt in das Medium durch den Schaft des Verbinders gepulst und damit die Reflexion des Mediums, die Ablenkung des Lichts bzw. das Durchtreten des Lichts bis auf die andere Seite des Verbinders in Empfänger (Lichtsensoren), die radial am Schaft des Verbinders angeordnet sind, gemessen und somit der Aggregatzustand des Mediums (gefroren, flüssig) bzw. das Nichtvorhandensein des Mediums festgestellt werden kann.

6. Aktiver Schwingkreis, Sensorik mittels Frequenzänderung

Es werden eine Spule als Sender und eine zweite Spule als Empfänger so angeordnet, dass das Medium zwischen diesen Spulen ist. Es wird eine Frequenz auf die Sendespule gegeben, wodurch ein elektromagnetisches Feld erzeugt wird. Dieses erzeugte Feld (die Feldstärke) wird vom Empfänger aufgenommen. Mit den verschiedenen Aggregatzuständen sind auch die Feldstärkenänderungen messbar und auswertbar.

Weiterhin kann durch eine empirische Formel als Funktion der Temperatur (im Heizelement) und der Zeit oder der Änderungsgeschwindigkeit der Heizelement-Widerstandswerte (dR/dt $\neq$ 0) oder über ein entsprechendes Kennfeld bestimmt werden, ob das gefrorene Fluid aufgetaut ist bzw. ob überhaupt ein Fluid vorhanden ist und die Fluid-Leitung einsatzbereit ist.

Es kann eine Überwachung des PWM-Tastverhältnisses m über die Zeit erfolgen. Bleibt das PWM-Tastverhältnis m über eine bestimmte Zeit in einem gewissen Bereich konstant, d. h. die Heizleistung bleibt konstant und schließlich die Temperatur im Heizelement, da der Widerstand des Heizelementes bzw. die Änderungsgeschwindigkeit der Widerstandswerte konstant bleibt, kann über ein Kennfeld bestimmt werden, ob das gefrorene Medium aufgetaut ist bzw. ob ein Medium vorhanden und aufgetaut ist und die Fluid-Leitung einsatzbereit ist.

Weiterhin kann optional ein Temperaturfühler für die Außen-/Umgebungstemperatur und/oder für die Innentemperatur im Fluid und/oder ein geeigneter Sensor zur Erfassung einer Fluid-Volumenänderung beispielsweise durch eine Wegmessung integriert werden, um davon abhängig verschiedene Parameter für die Regelung vorzugeben und beispielsweise die Heiztemperatur konstant zu halten.

Es besteht weiterhin die vorteilhafte Möglichkeit, das jeweilige Fluid zu erkennen und zu bestimmen. Dazu kann das Auftauverhalten des jeweiligen Mediums über ein in der Reglereinheit abgelegtes Kennfeld beschrieben sein, beispielsweise über die Temperaturänderung und Zeitdifferenz. Durch einen Vergleich mit diesem gespeicherten Kennfeld kann erkannt werden, um welches Medium es sich handelt, beispielsweise ob es tatsächlich ein SCR-Medium (wässrige Harnstofflösung) ist oder nicht. Durch diese vorteilhafte Maßnahme kann eine eventuelle Falsch-Betankung des Fahrzeugs erkannt werden.

Weiterhin kann eine mittelbare Temperaturmessung erfolgen. Anhand der Daten des Heizelementes (elektrischer Widerstand und geometrische Daten, beispielsweise Durchmesser bzw. Querschnitt und Länge eines Heizleiters) und einer durch eine Konstant-Stromquelle gewonnenen Spannung am Widerstand des Heizelementes kann die aktuelle Temperatur bzw. ein Temperaturbereich im Heizelement berechnet werden (über den temperaturabhängigen Widerstand).

Das erfindungsgemäße Heizsystem kann mit Vorteil in ein "On-Board-Diagnose-System" (OBD) einbezogen werden. Dazu kann das erfindungsgemäße System, insbesondere die Reglereinheit 30, an einen so genannten CAN-BUS (Schnittstelle zur OBD) angebunden sein. Über diese Anbindung lässt sich die Temperatur über eine ID einlesen, um davon abhängig verschiedene Parameter bzw. über eine Kennfeld-Abfrage die Leistungszufuhr für die Regelung vorzugeben und beispielsweise die Heiztemperatur konstant zu halten oder auch die Heizung abzuschalten, um in bestimmten Betriebszuständen Energie einzusparen. Vorteilhafterweise führt hierbei die erfindungsgemäße Regelung selbstständig eine Funktionsprüfung und Fehlerdiagnose der Leitung durch und gibt die Information an die OBD-Unit mittels CAN-BUS weiter, ob die Leitung einsatzbereit ist oder nicht. Dies bedeutet, dass die OBD kein Signal an den Regler für den Start der Funktionsprüfungen der Leitung abgibt, vielmehr führt dies das erfindungsgemäße Heizsystem bzw. die Reglereinheit selbst aus.

Hinsichtlich der oben erläuterten PWM-Ansteuerung ist ergänzend zu erwähnen, dass ein bevorzugtes PWM-Frequenzband aufgrund der thermischen Trägheit des Systems im Bereich von 0,1 Hz bis 1 kHz liegt. Hierbei wird bevorzugt eine Periodendauer von 50 ms, also eine Frequenz von 20 Hz vorgegeben.

Aufgrund der erfindungsgemäßen Regelung können alle Heizelemente (bei allen Komponenten des Fluid-Leitungssystems 1, insbesondere bei den Leitungsverbindern 4, 6 gleich, d. h. mit gleichen Eigenschaften/Werten, ausgebildet sein, weil die Heizleistung über die Regelung individuell eingestellt werden kann. Somit können die Heizelemente insbesondere der Leitungsverbinder stets beispielsweise aus dem gleichen Heizleiter-Material bestehen und somit unabhängig hergestellt werden.

Im Rahmen des erfindungsgemäßen Systems können zusätzliche Sensoren verwendet werden:

- Innen-/Außen-Temperatursensoren

- Innen-/Außen-Drucksensoren (insbesondere Dehnungsmessstreifen zur Erfassung einer Volumen- bzw. Druckänderung beim Einfrieren oder Auftauen des Fluids)

- Temperaturschalter zur Auftau-/Einfrier-Erkennung, wobei ein beliebiges Referenzmedium (Harnstofflösung oder anderes) sich außerhalb der Fluidleitung in einem hermetisch dichten Gefäß befindet, wobei dieses Gefäß mit einer Druckdose verbunden ist. Die Druckdose betätigt einen Schaltkontakt.

- Temperaturabhängige Widerstandsmessung

- Widerstandsänderungsgeschwindigkeit dR/dt

Das erfindungsgemäße System arbeitet verlustleistungsoptimiert, der Regler benötigt keinen Kühlkörper.

Durch den Regler kann eine Fehlererkennung und Fehlerauswertung bezüglich des Leitungssystems und insbesondere eine Rückmeldung an die OBD-Unit erfolgen, insbesondere zur Erkennung, ob das System funktionsfähig ist. Hierbei werden beispielsweise folgende Kriterien berücksichtigt:

- Leitung defekt (Kurzschluss, Übertemperatur im Treiber)
- Leitung zu heiß
- Leitung wird nicht warm
- Kein Fluid in der Leitung
- Batteriespannung außerhalb eines bestimmten Arbeitsbereiches
- Sensorsignal außerhalb eines Arbeitsbereiches
- Widerstandswerte außerhalb eines Betriebsbereiches

Aufgrund der Ansteuerung der Heizelemente mit PWM-Impulsen sollten Maßnahmen zur EMV (Elektromagnetische Verträglichkeit) vorgesehen sein:

- Verwendung von geschirmten Leitungen/Kabeln

- Abgeschirmtes Gehäuse für die Regelung

  o Werkstoff des Gehäuses selbst ist elektrisch leitend

  o metallische Folie (z. B. Alu) in das Gehäuse einbringen (Auskleben, Auskleiden)

- Abschirmung um alle Heizelemente, d. h. im Bereich des Leitungsmantels 12 und im Bereich der Gehäuse 10 der Leitungsverbinder, wobei diese Abschirmung verklebt oder nicht verklebt und ausgebildet sein kann als

  o Drahtgeflecht

  o Foliengeflecht

  o (gewickelte, ggf. selbstklebende) Folie, die zweckmäßigerweise auch als Hitzeschutz verwendet werden kann

- die Abschirmung kann zur Fixierung des Heizelementes insbesondere im Bereich der Fluidleitung genutzt werden.

Abschließend sollen noch einige vorteilhafte Ausgestaltungsmerkmale erläutert werden.

Wie sich aus Fig. 1 ergibt, kann das Steuerglied 18 innerhalb eines im Leitungsbereich angeordneten Anschlussgehäuses 23 untergebracht und über elektrische, bevorzugt in einem Mantel 25 (z. B. Wellrohr) verlaufende Anschlussleitungen und über Steckverbindungen 27 mit der Versorgungsspannung U verbindbar sein. Entsprechendes gilt auch für die bevorzugte Reglereinheit 30.

Bei der Reihenschaltung der Heizelemente $R_L$, $R_{V1}$ und $R_{V2}$ des Leitungssystems 1 gemäß Fig. 2 bzw. Fig. 12 ist es vorteilhaft, wenn das Heizelement $R_L$ der Fluidleitung 2 einen Widerstand pro Meter Leitungslänge aufweist, der in einem konstanten Verhältnis V zu dem Widerstand jedes Verbinder-Heizelementes steht. Vorzugsweise beträgt dieses Verhältnis V = 10:1. Beträgt beispielsweise die Heizleistung jedes Verbinder-Heizelementes $R_{V1}$ bzw. $R_{V2}$ 1,5 W, so weist das Heizelement $R_L$ der Leitung 2 eine Heizleistung von 15 W/m auf. Aufgrund dieses konstanten Verhältnisses wird nur ein Heizleiter-Material für das komplette mehrteilige Leitungssystem 1 benötigt.

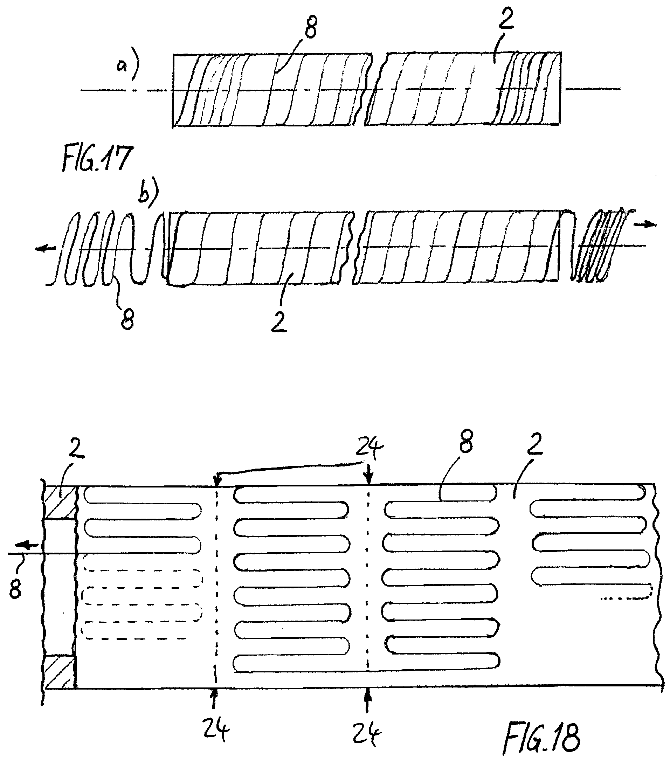

Wie sich noch aus Fig. 17 ergibt, kann bei einer Vorfertigung die Fluidleitung 2 derart mit dem Heizdraht 8 bewickelt werden, dass jeweils an den Enden der Fluidleitung 2 mehr Heizdraht 8 durch engere Bewicklung aufgewickelt wird. Dabei wird bevorzugt das obige konstante Wickelverhältnis entsprechend berücksichtigt. Es kann dann vor dem Anschluss der Leitung 2 an die Leitungsverbinder 4, 6 jeweils endseitig aus einem "Draht-Reservoir" ein Stück des Heizdrahtes 8 aus einer Leitungsisolation herausgezogen werden (siehe die Pfeile in Fig. 17b), und diese Längen können dann zum Umwickeln des jeweiligen Leitungsverbinders 4, 6 verwendet werden. Hierdurch entfallen vorteilhafterweise Anschlussverbindungen z. B. durch Crimpen zwischen Leitung 2 und Verbindern 4, 6.

Wie beispielhaft in Fig. 18 dargestellt ist, kann ein entsprechendes Heizdraht-Reservoir mit besonders großer Länge des Heizdrahtes 8 dadurch gebildet werden, dass der Heizdraht 8 im Endbereich der Leitung 2 in Umfangsrichtung der Leitung zickzack- oder mäanderförmig aufgebracht ist. Hierbei können mehrere Mäander-Zonen in Längsrichtung hintereinander vorgesehen sein, wobei jeweils zwischen diesen Zonen Markierungen 24 auf der Leitung vorgesehen sind, die Soll-Schnittstellen markieren.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

**Patentansprüche**

1. Heizsystem für ein Fluid-Leitungssystem (1), wobei zumindest einer Fluidleitung (2) mindestens ein elektrisches Heizelement ($R_L$) zugeordnet ist, das zur Beaufschlagung der Fluidleitung (2) mit einer vorbestimmten Heizleistung mit einer elektrischen Betriebsspannung ($U_B$) versorgt wird, wobei das Heizelement ($R_L$) mittels eines elektronischen Steuergliedes (18) zur Einstellung oder Regelung seiner Heizleistung mit einem bestimmten, oder variablen Tastverhältnis pulsweitenmoduliert getaktet angesteuert wird,
**dadurch gekennzeichnet, dass** das der Fluidleitung (2) zugeordnete Heizelement ($R_L$) mit mindestens einem weiteren Heizelement ($R_{V1}$/$R_{V2}$), elektrisch in Reihe geschaltet ist, wobei das Steuerglied (18) zumindest eine Teilmenge der vorhandenen Heizelemente ($R_L$, $R_{V1}$, $R_{V2}$) einzeln zur individuellen Einstellung oder Regelung seiner Heizleistung ansteuert.

2. Heizsystem nach Anspruch 1,
**dadurchgekennzeichnet, dass** das der Fluidleitung (2) zugeordnete Heizelement ($R_L$) mit zwei jeweils einem Leitungsverbinder (4, 6) zugeordneten Heizelementen ($R_{V1}$, $R_{V2}$) elektrisch in Reihe geschaltet ist.

3. Heizsystem nach Anspruch 1 oder 2 ,
**dadurch gekennzeichnet, dass** dem/jedemindividuell anzusteuerndem Heizelement ($R_L$, $R_{V1}$, $R_{V2}$) ein elektronischer Schalter (20) parallel geschaltet ist, wobei die Schalter (20) von dem Steuerglied (18) über einen Steuerbus (22) individuell ansteuerbar sind.

4. Heizsystem nach einem der Ansprüche 1 bis 3,
**dadurch gekennzeichnet, dass** dieGesamt-Heizleistungder Reihenschaltung aller Heizelemente ($R_L$, $R_{V1}$, $R_{V2}$) über einen ebenfalls in der Reihenschaltung liegenden elektronischen Schalter (20a) von dem Steuerglied (18) steuerbar oder regelbar ist.

5. Heizsystem nach einem der Ansprüche 1 bis 4,
**dadurch gekennzeichnet, dass** bei einer Reihenschaltung des Leitungs-Heizelementes ($R_L$) mit mindestens einem Heizelement ($R_{V1}$, $R_{V2}$) eines mit der Fluidleitung (2) verbundenen Leitungsverbinders (4, 6) das Leitungs-Heizelement ($R_L$) eine Heizleistung pro Meter Leitungslänge (L) aufweist, die in einem bestimmten Verhältnis von insbesondere 10 : 1 zu der Heizleistung des/jedes Verbinder-Heizelementes ($R_{V1}$, $R_{V2}$) steht.

6. Heizsystem nach einem der Ansprüche 1 bis 5,
**dadurch gekennzeichnet, dass** das Heizelement ($R_L$) aus einem schraubenlinienförmig um die Fluidleitung (2) verlaufenden Heizwendelmaterial (14) besteht, wobei mindestens ein Heizdraht (8) schraubenlinienförmig um eine Seele (14a) des Heizwendelmaterials (14) verläuft.

7. Heizsystem nach einem der Ansprüche 1 bis 6,
**dadurch gekennzeichnet, dass** das Heizelement ($R_L$) aus mindestens zwei in Reihe geschalteten Heizleitern ($R_{L1}$ bis $R_{L4}$) besteht.

8.  Heizsystem nach einem der Ansprüche 1 bis 7, **dadurch gekennzeichnet, dass** die Fluidleitung (2) derart mit einer Heizdraht-Bewicklung und einem in mindestens einem Leitungs-Endbereich vorgesehenen, durch engere Bewicklung gebildeten Heizdraht-Reservoir vorgefertigt ist, dass eine bestimmte Länge des Heizdrahtes (8) aus dem Reservoir herausziehbar und zum Bewickeln eines mit der Fluidleitung (2) zu verbindenden Leitungsverbinders (4, 6) verwendbar ist.

**Claims**

1.  Heating system for a fluid line system (1), wherein at least one fluid line (2) has at least one associated electrical heating element ($R_L$) which is supplied with an electrical operating voltage ($U_B$) for applying a predetermined heating output to the fluid line (2), wherein the heating element ($R_L$) is actuated in a manner clocked with pulse-width modulation with a specific or variable duty cycle by means of an electronic control element (18) for setting or regulating the heating output of the said heating element, **characterized in that** the heating element ($R_L$) which is associated with the fluid line (2) is connected electrically in series to at least one further heating element ($R_{V1}/R_{V2}$), wherein the control element (18) actuates at least some of the existing heating elements ($R_L$, $R_{V1}$, $R_{V2}$) individually in order to individually set or regulate the heating output of the said heating elements.

2.  Heating system according to Claim 1, **characterized in that** the heating element ($R_L$) which is associated with the fluid line (2) is connected electrically in series to two heating elements ($R_{V1}$, $R_{V2}$) which are each associated with a line connector (4, 6).

3.  Heating system according to Claim 1 or 2, **characterized in that** an electronic switch (20) is connected in parallel with the/each heating element ($R_L$, $R_{V1}$, $R_{V2}$) which is to be individually actuated, wherein the switches (20) can be individually actuated by the control element (18) via a control bus (22).

4.  Heating system according to one of Claims 1 to 3, **characterized in that** the total heating output of the series circuit comprising all of the heating elements ($R_L$, $R_{V1}$, $R_{V2}$) can be controlled or regulated by the control element (18) by means of an electronic switch (20a) which is likewise situated in the series circuit.

5.  Heating system according to one of Claims 1 to 4, **characterized in that,** in a series circuit comprising the line heating element ($R_L$) and at least one heating element ($R_{V1}$, $R_{V2}$) of a line connector (4, 6) which is connected to the fluid line (2), the line heating element ($R_L$) has a heating output per metre of line length (L) which is in a specific ratio of, in particular, 10:1 in relation to the heating output of the/each connector heating element ($R_{V1}$, $R_{V2}$).

6.  Heating system according to one of Claims 1 to 5, **characterized in that** the heating element ($R_L$) comprises a heating coil material (14) which runs in a helical manner around the fluid line (2), wherein at least one heating wire (8) runs in a helical manner around a core (14a) of the heating coil material (14).

7.  Heating system according to one of Claims 1 to 6, **characterized in that** the heating element ($R_L$) comprises at least two heating conductors ($R_{L1}$ to $R_{L4}$) which are connected in series.

8.  Heating system according to one of Claims 1 to 7, **characterized in that** the fluid line (2) is prefabricated with a heating wire winding and a heating wire reservoir, which is provided in at least one line end region and is formed by closer winding, in such a way that a specific length of the heating wire (8) can be drawn from the reservoir and can be used for winding a line connector (4, 6) which is to be connected to the fluid line (2).

**Revendications**

1.  Système de chauffage pour système (1) de conduits de fluide, dans lequel au moins un élément chauffant électrique ($R_L$) est associé à un conduit (2) de fluide et est alimenté en une tension électrique de service ($U_B$) prédéterminée destinée à être appliquée sur le conduit (2) de fluide, l'élément chauffant ($R_L$) étant commandé de manière cadencée et en modulation de la largeur d'impulsion à un taux d'échantillonnage défini ou variable au moyen d'un organe électronique de commande (18) pour ajuster ou réguler sa puissance de chauffage, **caractérisé en ce que** l'élément chauffant ($R_L$) associé au conduit (2) de fluide est raccordé électriquement en série à au moins un autre élément chauffant ($R_{V1}/R_{V2}$) et **en ce que** l'organe de commande (18) commande séparément au moins une partie des éléments chauffants ($R_L$, $R_{V1}$, $R_{V2}$) présents pour ajuster ou réguler individuellement leur puissance de chauffage.

2.  Système de chauffage selon la revendication 1, **caractérisé en ce que** l'élément chauffant ($R_L$) associé au conduit (2) de fluide est raccordé électriquement en série à deux éléments chauffants ($R_{V1}$,

$R_{V2}$) associés chacun à un raccord (4, 6) de conduit.

3. Système de chauffage selon les revendications 1 ou 2,
   **caractérisé en ce qu'**un commutateur électronique (20) est raccordé en parallèle à chaque élément chauffant ($R_L$, $R_{V1}$, $R_{V2}$) à commander séparément et en ce que les commutateurs (20) peuvent être commandés individuellement par l'organe de commande (18) par l'intermédiaire d'un bus de commande (22).

4. Système de chauffage selon l'une des revendications 1 à 3,
   **caractérisé en ce que** la totalité de la puissance de chauffage du circuit série de tous les éléments chauffants ($R_L$, $R_{V1}$, $R_{V2}$) peut être commandée ou régulée par l'organe de commande (18) par l'intermédiaire d'un commutateur électronique (20a) également prévu dans le circuit série.

5. Système de chauffage selon l'une des revendications 1 à 4,
   **caractérisé en ce que** dans le cas d'un raccordement en série de l'élément chauffant ($R_L$) de conduit à au moins un élément chauffant ($R_{V1}$, $R_{V2}$) d'un raccord (4, 6) de conduit raccordé au conduit (2) de fluide, l'élément chauffant ($R_L$) de conduit présente une puissance de chauffage par mètre de longueur (L) de conduit qui est en rapport défini, en particulier de 10:1, par rapport à la puissance de chauffage de l'élément chauffant et/ou de chaque élément chauffant de raccord ($R_{V1}$, $R_{V2}$).

6. Système de chauffage selon l'une des revendications 1 à 5,
   **caractérisé en ce que** l'élément chauffant ($R_L$) est constitué d'un matériau (14) d'hélice de chauffage qui s'étend en ligne hélicoïdale autour du conduit (2) de fluide, au moins un fil chauffant (8) s'étendant en ligne hélicoïdale autour d'une âme (14a) du matériau (14) d'hélice de chauffage.

7. Système de chauffage selon l'une des revendications 1 à 6,
   **caractérisé en ce que** l'élément chauffant ($R_L$) est constitué d'au moins deux conducteurs de chauffage ($R_{L1}$ à $R_{L4}$) raccordés en série.

8. Système de chauffage selon l'une des revendications 1 à 7,
   **caractérisé en ce que** le conduit (2) de fluide est préfabriqué avec un enroulement de fil chauffant et une réserve de fil chauffant formée par un enroulement plus serré dans au moins une partie d'extrémité du conduit, de telle sorte qu'une longueur définie de fil chauffant (8) puisse être extraite de la réserve et être utilisée pour s'enrouler autour d'un raccord (4, 6) de conduit à relier au conduit (2) de fluide.

FIG.1

FIG.2

FIG.3

FIG.4

FIG.5

FIG.6

FIG.7

a)

b)

c)

A1 | A2 | A3 | A4

14

FIG. 8

FIG. 9

**FIG. 10**

**FIG. 11**

**FIG. 12**

**FIG. 13**

**FIG. 14**

FIG. 15

**FIG. 16**

FIG.17

FIG.18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006047090 A2
- DE 102007003454 A1
- WO 9904210 A
- JP 2002252073 A

- EP 1985908 A1
- DE 4135082 C1
- WO 2007073286 A1
- WO 2009040223 A2